# EUROPÄISCHE PATENTSCHRIFT

(11) **EP 0 835 792 B1**
(45) Veröffentlichungstag und Bekanntmachung des Hinweises auf die Patenterteilung: **27.03.2002**
(21) Anmeldenummer: 97115900.9
(22) Anmeldetag: 12.09.1997
(51) Int. Cl.: B60S 1/34

(54) **Wischarm einer Wischvorrichtung für eine Scheibe eines Fahrzeuges**
Wiper arm from a vehicle windscreen wiper device
Bras d'essuie-glace d'un système d'essuyage de pare-brise de véhicule

(30) Priorität: 09.10.1996 DE 19641601
(43) Veröffentlichungstag der Anmeldung: 15.04.1998
(73) Patentinhaber: Valeo Auto-Electric Wischer und Motoren GmbH, 74321 Bietigheim-Bissingen (DE)
(72) Erfinder: Egner-Walter, Bruno, 74076 Heilbronn (DE)
(74) Vertreter: Dreiss, Fuhlendorf, Steimle & Becker

(56) Entgegenhaltungen:
- WO-A-82/02693
- DE-A- 4 136 938
- DE-A- 4 140 959
- DE-C- 3 532 848
- FR-A- 2 124 865
- PATENT ABSTRACTS OF JAPAN vol. 096, no. 009, 30.September 1996 & JP 08 133023 A (NIPPON WAIPABUREEDE KK), 28.Mai 1996,

## Beschreibung

Die Erfindung bezieht sich auf einen Wischarm einer Wischvorrichtung für eine Scheibe eines Fahrzeuges mit den Merkmalen des Anspruchs 1 und geht dabei aus von der DE 41 40 959 A1, aus welcher ein derartiger Wischarm ersichtlich ist.

Ein Wischarm gemäß der DE 41 40 959 A1 weist ein Befestigungsteil auf, das aus einem Blechkörper und aus einem Gußteil aus Metall zusammengesetzt ist. Das Gußteil ist formschlüssig in den freien, U-förmigen Querschnitt des Blechkörpers eingesetzt. Am unteren Rand der Seitenwände des Blechkörpers sind Laschen ausgebildet, die, vorzugsweise um 90 Grad, nach innen gebogen sind und das Gußteil an seiner Unterseite hintergreifen. Dabei ist auch vorgesehen, daß das Gußteil an seiner Unterseite randoffene Ausnehmungen aufweist, in welche die Laschen hineingebogen sind.

Nachteilig hieran ist, daß am unteren Rand des Befestigungsteiles kleine Spalte und scharfkantige Vorsprünge nicht zu vermeiden sind, was eine permanente Verletzungsgefahr in sich birgt. Es ist auch möglich, daß sich die Borsten von Waschbürsten in den Spalten verhaken, wodurch Beschädigungen eintreten können.

Bei einer anderen Ausführung eines Wischarmes gemäß D 41 40 959 A1 ist vorgesehen, daß das Gußteil durch an den Seitenwänden des Blechkörpers befindliche, nach innen vorspringende Rastnasen an dem Blechkörper befestigt ist. Die Rastnasen befinden sich in unmittelbarer Nähe des unteren Randes der Seitenwände des Blechkörpers und hintergreifen rastend das Gußteil. Hierbei sind im Gußteil Ausnehmungen vorgesehen, deren oberes Ende jeweils von den Rastnasen hintergriffen wird. Die Rastnasen sind durch Eindrücken entsprechender Abschnitte der Seitenwände erzeugt worden, bevor das Gußteil am Blechkörper montiert worden ist. Bei der Montage wird das Gußteil von unten in den freien Querschnitt des Blechkörpers eingedrückt, wobei die Seitenwände des Blechkörpers vorübergehend federnd auseinandergedrückt werden, bis die Nasen das Gußteil rastend hintergreifen.

Bei dieser Ausführung des Wischarmes wird ein Nachteil darin gesehen, daß die Befestigung des Gußteiles am Blechkörper eventuell nicht ausreichend stabil ist. Aufgrund des für die Montage erforderlichen großen Abstandes der Rastnasen vom Rücken des Blechkörpers genügen bereits geringere, beim Betrieb der Wischvorrichtung wirkende Kräfte bzw. Kraftmomente, um die Seitenwände so weit zum Auseinanderfedern zu bringen, daß sich die Rastverbindung der Rastnasen lösen kann.

Die Aufgabe der Erfindung besteht in der Verbesserung eines Wischarmes der eingangs beschriebenen Art dahingehend, daß die permanente Verletzungsgefahr beseitigt und eine mit Sicherheit ausreichend stabile Befestigung des Gußteiles an dem Blechkörper gewährleistet ist.

Die Aufgabe wird erfindungsgemäß durch einen Wischarm mit den Merkmalen des Anspruchs 1 gelöst. Mindestens zwei Zungen sind so aus den Seitenwänden des Blechkörpers herausgetrennt, daß sie jeweils nur noch an einer Seite mit der Seitenwand verbunden sind. Zur Befestigung des Gußteiles an dem Blechkörper sind diese Zungen unter bleibender Verformung jeweils in eine Ausnehmung des Gußteiles hineingedrückt. Da sich diese Zungen nicht am unteren Rand sondern innerhalb der Seitenwände des Blechkörpers befinden, ist eine permanente Verletzungsgefahr weitgehendst reduziert. Ebenso besteht nicht die Gefahr, daß sich die Borsten einer Waschbürste an dem Befestigungsteil des Wischarmes verhaken und zu Beschädigungen führen können. Die mindestens zwei unter bleibender Verformung jeweils in eine Ausnehmung des Gußteiles hineingedrückten Zungen gewährleisten trotzdem eine den Anforderungen einer Scheibenwischvorrichtung für Fahrzeuge gerecht werdende stabile Befestigung des Gußteiles an dem Blechkörper.

Eine Weiterbildung der Erfindung gemäß Anspruch 2 sieht vor, daß sich die Zungen jeweils nur mit ihrem freien Ende in den Ausnehmungen des Gußteiles abstützen. Dadurch ist es möglich, die Zungen relativ kurz und damit platzsparend auszubilden. Außerdem besitzt eine kürzere Zunge eine größere Formstabilität.

Mit einer Weiterbildung gemäß Anspruch 3 wird erreicht, daß die Zungen sehr hohe Abstützkräfte aufnehmen können, weil durch die flächige Auflage der Stirnfläche der Zungen auf den entsprechenden Stützflächen der Ausnehmungen eine stabile form- und kraftschlüssige Abstützung erfolgt.

Eine Weiterbildung gemäß Anspruch 4 hat den Vorteil, daß die Zungen nur relativ gering verformt werden müssen und dabei trotzdem eine stabile Abstützung an den betreffenden Stützflächen der Ausnehmungen erreicht wird. Stärkere Verfor mungen der Zungen könnten zu einer Materialerweichung oder zum Abbrechen der Zungen führen.

Eine vorteilhafte Weiterbildung der Erfindung gemäß Anspruch 5 sieht vor, daß die Zungen mit ihrem freien Ende jeweils in Richtung auf den Rücken des Blechkörpers weisen. Damit wird erreicht, daß eine wesentliche Komponente der abzustützenden Kräfte in Längsrichtung der Zunge und somit rechtwinklig zu der mit der Seitenwand des Blechkörpers verbundenen Seite wirkt. In dieser Wirkungsrichtung ist die Zunge am stabilsten, und es ist somit eine optimale Abstützwirkung bzw. Stabilität der Befestigung des Gußteiles am Blechkörper erreichbar.

Durch eine Weiterbildung gemäß Anspruch 6 wird erreicht, daß der Abstand zwischen dem freien Ende der Zunge und dem Übergang der Seitenwand des Blechkörpers in den Rücken klein ist. Die Abstützstelle zwischen dem Gußteil und der Zunge des Blechkörpers befindet sich somit an einem Ort nahe dem Rücken des Blechkörpers, an dem die beim Betrieb der Wischvorrichtung auftretenden Kräfte bzw. Kraftmomente nicht in der Lage sind, die Seitenwände des Blechkörpers so weit auseinanderzufedern, daß die Abstützung der Zungen gegenüber dem Gußteil aufgehoben werden könnte.

Eine Weiterbildung gemäß Anspruch 7 hat den besonderen Vorteil, daß sich die scharfen Kanten der Zunge, insbesondere an ihren freien Enden, zumindest teilweise in das Material des Gußteiles eingraben können, wodurch sich die Zungen zu einem gewissen Maß an dem Gußteil verhaken. Die Stabilität der Befestigung des Gußteiles an dem Blechkörper wird dadurch noch weiter verbessert.

Anhand von Ausführungsbeispielen wird die Erfindung nachfolgend näher beschrieben. In den zugehörigen Zeichnungen zeigen:
- Fig. 1: in teilweise geschnittener Darstellung einen Wischarm für eine Windschutzscheibe eines Kraftfahrzeuges,
- Fig. 2: eine Ansicht in Richtung des Pfeiles P auf das mit der Wischerwelle zu verbindende Ende des Wischarmes,
- Fig. 3: in Seitenansicht ein Ausführungsbeispiel der Erfindung,
- Fig. 4: als senkrechten Schnitt quer zur Längsrichtung des Wischarmes ein anderes Ausführungsbeispiel der Erfindung,
- Fig. 5: in teilweise geschnittener Darstellung eine Seitenansicht eines anderen Ausführungsbeispieles der Erfindung und
- Fig. 6: in teilweise geschnittener Darstellung ein letztes Ausführungsbeispiel der Erfindung.

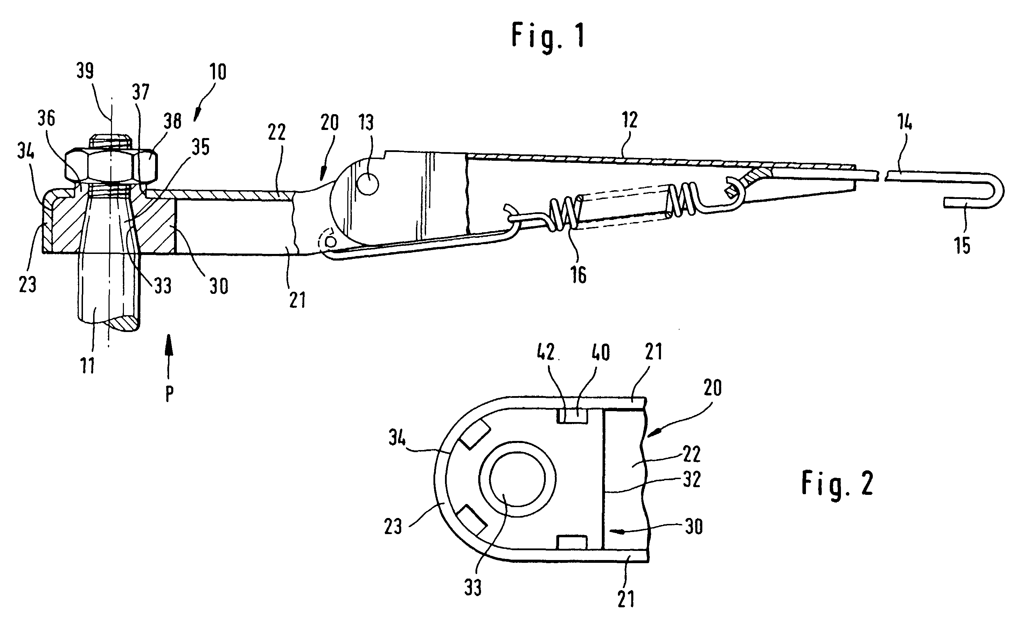

Als wesentliche Bestandteile eines Wischarmes erkennt man in Fig. 1 ein Befestigungsteil 10, mit dem der Wischarm auf einer Wischerwelle 11 drehfest befestigt ist, ein aus Blech geformtes, U-förmiges Gelenkteil 12, das über einen Bolzen 13 schwenkbar am Befestigungsteil 10 angelenkt ist, und eine Wischstange 14, die am freien Ende zu einem Haken 15 gebogen ist und am anderen Ende durch Verkrimpen fest mit dem Gelenkteil 12 verbunden ist. Eine Zugfeder 16, die am Befestigungsteil 10 und an der Wischstange 14 eingehängt ist, ist im wesentlichen innerhalb des Gelenkteiles 12 angeordnet.

Das Befestigungsteil 10 umfaßt einen Blechkörper 20 von länglicher Form, der sich von der Wischerwelle 11 aus in Längsrichtung des gesamten Wischarmes erstreckt. In einem Querschnitt senkrecht zur Längsrichtung des Wischarmes besitzt der Blechkörper 20 im wesentlichen eine U-Form mit zwei gegenüberliegenden Seitenwänden 21 und einem die beiden Seitenwände 21 miteinander verbindenden Rücken 22. Die Seitenwände 22 verlaufen größtenteils parallel zueinander, gehen jedoch in einem um die Wischerwelle 11 herumführenden halbzylindrischen Abschnitt 23 ineinander über, der als Teil der Seitenwände 21 zu betrachten ist. Der Blechkörper 20 nimmt ein Gußteil 30 aus einem Zink- oder Aluminiumdruckguß auf, dessen Höhe im wesentlichen der Höhe der Seitenwände 21, 23 des Blechkörpers 20 entspricht. Die Außenkontur des Gußteiles 30 ist, wie auch die Fig. 2 zeigt, an die im Bereich der Wischerwelle 11 von den Innenflächen des Blechkörpers 20 gebildete Form angepaßt, so daß er diese Innenflächen berührt und sich an ihnen abstützt. Von einer Seitenwand 21 zur anderen verläuft die Außenkontur des Gußteiles 30 in einem ebenen Abschnitt 32, der senkrecht auf den Seitenwänden 21 steht.

Das Gußteil 30 besitzt eine Bohrung 33, die zur Aufnahme der Wischerwelle 11 bestimmt ist. Der halbzylindrische Abschnitt 23 der Seitenwände 21 sowie der entsprechende Abschnitt 34 der Außenkontur des Gußteiles 30 haben die Achse dieser Bohrung 33 und damit die Achse 39 der Wischerwelle 11 als Mittelachse. Es ist erkennbar, daß das Gußteil 30 nur in einem begrenzten Bereich um die Wischerwelle 11 vorhanden ist. Auf seiner dem Rücken 22 zugewandten Oberseite trägt das Gußteil 30 einen ringförmigen Bund 36, dessen Achse mit der Achse 39 zusammenfällt und mit dem das Gußteil durch eine Öffnung 37 im Rücken 22 des Blechkörpers 20 hindurchtritt und den Rükken 22 um 0,2 - 0,3 mm überragt. Das Gußteil 30 wird mit einer Schraubenmutter 38 auf die konische Schulter 15 der Wischerwelle 11 gepreßt. Wegen des überstehenden Bunds 36 beaufschlagt die Mutter 38 dabei direkt das Gußteil 30, so daß dieselben Reibungsverhältnisse wie bei einem ganz aus einem Druckguß hergestellten Befestigungsteil bestehen.

Durch die angepaßte Außenkontur des Gußteiles 30 sind der Blechkörper 20 und das Gußteil 30 in Drehrichtung um die Achse 39 formschlüssig miteinander verbunden. Die Außenkontur des Gußteiles 30 und der Bund 36 sichern das Gußteil 30 auch in alle anderen Richtungen, ausgenommen in Richtung der Öffnung des U-förmigen Querschnittes des Blechkörpers 20.

Das Wesen der Erfindung ist nunmehr auf eine Befestigung des Gußteiles 30 an dem Blechkörper 20 in der noch verbleibenden Richtung, nämlich in Richtung der Öffnung des U-förmigen Querschnittes des Blechkörpers 20, gerichtet. Verschiedene Möglichkeiten dieser Befestigung sind aus den Fig. 2 bis 6 ersichtlich. Mindestens zwei Zungen 40 sind, beispielsweise durch Stanzen, aus den Seitenwänden 21, 23 des Blechkörpers 20 herausgetrennt. Die Zungen 40 sind also nur noch an der ihrem freien Ende 41 gegenüberliegenden Seite 43 mit den Seitenwänden 21, 23 verbunden. Unter bleibender Verformung sind die Zungen 40 jeweils in eine ihnen zugeordnete Ausnehmung 42 hineingedrückt, nachdem das Gußteil 30 von unten her in den freien Querschnitt des Blechkörpers 20 eingesetzt worden ist. Die Zungen 40 des Blechkörpers 20 stützen also das Gußteil 30 derartig ab, daß dieses stabil an dem Blechkörper 20 befestigt ist und nicht in Richtung der Öffnung des U-förmigen Querschnittes des Blechkörpers 20 aus diesem herausgleiten kann.

Bei dem Ausführungsbeispiel von Fig. 2 ist zu erkennen, daß der Blechkörper 20 vier Zungen 40 und somit das Gußteil 30 vier Ausnehmungen 42 aufweist, wovon jeweils zwei gegenüberliegend an den Seitenwänden 21 angeordnet und zwei weitere im Abschnitt 23 der Seitenwände 21 vorgesehen sind. Durch diese relativ gleichmäßige Verteilung von vier Zungen 40 in bezug auf die Außenkontur des Gußteiles 30 wird eine gleichmäßige Verteilung der Abstützkräfte und somit eine stabile Befestigung erreicht.

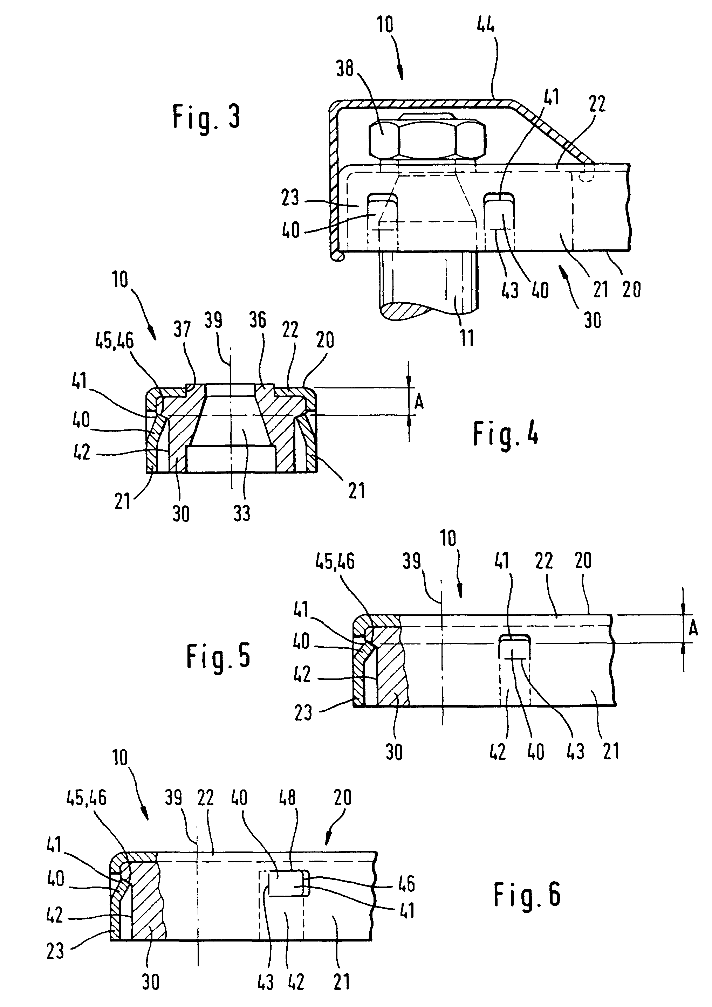

Aus der Fig. 3 ist ersichtlich, daß die Zungen 40 jeweils mit ihrem freien Ende 41 in Richtung auf den Rücken 22 des Blechkörpers 20 weisend angeordnet sind. Wie bereits früher beschrieben, wird dadurch eine optimale Aufnahme der wesentlichen abzustützenden Kräfte bzw. Kraftmomente erreicht, welche in diesem Fall in Längsrichtung der Zungen 40 und somit rechtwinklig zu der mit den Seitenwänden 21, 23 verbundenen Seite 43 der Zungen 40 wirken. In Fig. 3 ist noch zu erkennen, daß der Abschnitt des Befestigungsteiles 10, in dem sich die auf das Ende der Wischerwelle 11 aufgeschraubte Schraubenmutter 38 befindet, durch eine Kappe 44 abgedeckt ist.

Bei dem Ausführungsbeispiel gemäß Fig. 4 ist zu erkennen, daß zwei Zungen 40 in der durch die Achse 39 verlaufenden Schnittebene in den gegenüberliegenden Seitenwänden 21 des Blechkörpers 20 vorgesehen sind. Die Ausnehmungen 42 im Gußteil 30 sind kanalförmig ausgebildet und erstrecken sich bis zum unteren Rand des Gußteiles 30. Diese nach unten offene Ausbildung der Ausnehmungen 42 erfolgt aus werkzeugtechnischen Gründen. Nach oben hin, das heißt in Richtung auf den Rücken 22 des Blechkörpers 20, sind die Ausnehmungen 42 durch eine Fläche begrenzt, welche als Stützfläche 45 wirkt. Es ist zu erkennen, daß diese Stützflächen 45 in einem relativ geringen Abstand A von der Oberseite des Befestigungsteiles 10 und somit in einem Bereich nahe dem Übergang zwischen der Seitenwand 21 und dem Rücken 22 des Blechkörpers 20 vorgesehen sind. Außerdem ist zu erkennen, daß diese Stützflächen 45 jeweils um einen spitzen Winkel von etwa 20 Grad gegenüber einer gedachten rechtwinklig zur Seitenwand 21 verlaufenden Ebene und dabei in Richtung auf die Zunge 40 geneigt angeordnet ist. An der Stützfläche 45 stützt sich die unter bleibender Verformung in die Ausnehmung 42 hineingedrückte Zunge 40 mit ihrer am freien Ende 41 befindlichen schmalen Stirnfläche 46 ab. Dabei liegt die Stirnfläche 46 flächig auf der Stützfläche 45 auf, wodurch eine form- und kraftschlüssige Abstützung erfolgt. Die Stirnfläche 46 verläuft also parallel zu der Stützfläche 45 und ist daher um den gleichen spitzen Winkel gegenüber der gedachten Ebene geneigt angeordnet. Die Vorteile einer solchen Ausgestaltung sind bereits im Zusammenhang mit den entsprechenden Patentansprüchen genannt worden.

Um bei dem Ausführungsbeispiel gemäß Fig. 4 eine noch bessere Sicherung gegen eine relative Verdrehung des Gußteiles 30 gegenüber dem Blechkörper 20 um die Achse 39 zu gewährleisten, weisen die Öffnung 37 im Rücken 22 des Blechkörpers 20 und der Rand des Bundes 36 des Gußteiles 30 eine ineinandergreifende Verzahnung auf. Diese Verzahnung kann die Form einer Riffelung haben, die sich beim Einpressen des Gußteiles 30 in den Blechkörper 20 in die glatte Außenseite des Bundes 36 eingräbt. Die Verzahnung kann jedoch auch durch höhere Zähne in der Öffnung 37 gebildet sein, welche in entsprechende, schon beim Formen des Gußteiles 30 hergestellte Vertiefungen am Rand des Bundes 36 eingreifen.

Das Ausführungsbeispiel gemäß Fig. 5 unterscheidet sich von den vorhergehenden Ausführungsbeispielen im wesentlichen dadurch, daß hier insgesamt drei Zungen 40 vorgesehen sind, welche jeweils in eine Ausnehmung 42 des Gußteiles 30 hineingedrückt sind. Von diesen drei Zungen 40 ist eine Zunge 40 in dem die beiden Seitenwände 21 verbindenden Abschnitt 23 vorgesehen, und die beiden anderen Zungen 40 sind in den gegenüberliegenden Seitenwänden 21 und dabei in einem Bereich zwischen der Achse 39 und dem Ende des Befestigungsteiles 10 vorgesehen, an welchem das Gelenkteil 12 angelenkt ist. Ansonsten sind auch in diesem Fall die Zungen 40 senkrecht angeordnet und weisen mit ihren freien Enden 41 in Richtung auf den Rücken 22 des Blechkörpers 20. Ebenso ist der Abstand A zwischen der Oberseite des Blechkörpers 20 und dem freien Ende 41 der Zunge 40 relativ klein, um zu verhindern, daß sich die Abstützung zwischen den Zungen 40 und dem Gußteil 30 durch ein Auseinanderfedern der Seitenwände 21 des Blechkörpers 20 lösen kann. Um ein Lösen dieser Abstützung mit noch größerer Sicherheit zu verhindern, sollten die Zungen 40 zumindest an ihren freien Enden 41 scharfkantig ausgebildet sein. Dadurch wird erreicht, daß sich diese freien Enden 41 der Zungen 40 beim Eindrücken in die Ausnehmungen 42 in das Material des Gußteiles 30 in gewissem Maße eingraben und dadurch mit diesem verhaken.

Das Ausführungsbeispiel von Fig. 6 entspricht im wesentlichen demjenigen von Fig. 5, der wesentliche Unterschied besteht darin, daß in diesem Fall die gegenüberliegend in den Seitenwänden 21 angeordneten Zungen 40 in Längsrichtung des Wischarmes ausgerichtet sind. Die freien Enden 41 der Zungen 40 weisen also in Richtung auf das Gelenkteil 12, und die mit der Seitenwand 21 verbundene Seite 43 der Zunge 40 weist in Richtung auf den die beiden Seitenwände 21 verbindenden Abschnitt 23. In diesem Fall erfolgt eine Abstützung des Gußteiles 30 in der Richtung entgegen der Öffnung des U-förmigen Querschnittes des Blechkörpers 20 durch die rechtwinklig zu der Seite 43 verlaufende Seite 48 der Zungen 40. Die Stirnflächen 46 dieser beiden Zungen 40 stützen sich dabei jeweils an der ihnen gegenüberliegenden Seitenwand der Ausnehmung 42 ab. Dadurch wird eine zusätzliche Verdrehsicherung des Gußteiles 30 gegenüber dem Blechkörper 20 erreicht, so daß in diesem Fall auf eine zusätzliche Verzahnung entsprechend dem Ausführungsbeispiel von Fig. 4 verzichtet werden kann.

## Patentansprüche

1. Wischarm einer Wischvorrichtung für eine Scheibe eines Fahrzeuges mit einem Befestigungsteil (10), das von einem im Querschnitt im wesentlichen U-förmigen Blechkörper (20) mit zwei Seitenwänden (21) und einem die Seitenwände (21) verbindenden Rücken (22) sowie von einem Gußteil (30) aus Metall gebildet ist, welches eine, insbesondere konische, Bohrung (33) zur drehfesten Befestigung auf einer Wischerwelle (11) aufweist und an dem Blechkörper (20) befestigt ist, wobei das Gußteil (30) in dem freien Querschnitt des Blechkörpers (20) angeordnet ist und sich dabei an den Innenflächen des Blechkörpers (20) abstützt, **dadurch gekennzeichnet, daß** die Befestigung des Gußteils (30) an dem Blechkörper (20) durch mindestens zwei innerhalb der Seitenwände (21, 23) des Blechkörpers (20) befindliche und aus diesen herausgetrennte Zungen (40) erfolgt, welche, nachdem das Gußteil (30) in den freien Querschnitt des Blechkörpers (20) eingesetzt worden ist, jeweils unter bleibender Verformung in eine Ausnehmung (42) des Gußteiles (30) hineingedrückt sind.

2. Wischarm nach Anspruch 1, **dadurch gekennzeichnet, daß** sich die Zungen (40) mit ihrem freien Ende (41) in den Ausnehmungen (42) abstützen.

3. Wischarm nach Anspruch 2, **dadurch gekennzeichnet, daß** sich die Zungen (40) jeweils mit der an ihrem freien Ende (41) befindlichen Stirnfläche (46) an einer gegenüberliegenden Stützfläche (45) einer Ausnehmung (42) des Gußteiles (30) abstützen und daß dabei die Stirnfläche (46) der Zunge (40) und die Stützfläche (45) der Ausnehmung (42) parallel zueinander verlaufen.

4. Wischarm nach Anspruch 3, **dadurch gekennzeichnet, daß** die Stützfläche (45) der Ausnehmung (42) und die Stirnfläche (46) der Zunge (40) gegenüber einer gedachten rechtwinklig zur Seitenwand (21) verlaufenden Ebene in einem spitzen Winkel, der vorzugsweise etwa 10 Grad bis 25 Grad beträgt, angeordnet sind.

5. Wischarm nach einem der vorhergehenden Ansprüche, **dadurch gekennzeichnet, daß** die Zungen (40) mit ihrem freien Ende (41) in Richtung auf den Rücken (22) des Blechkörpers (20) weisen.

6. Wischarm nach einem der vorhergehenden Ansprüche, **dadurch gekennzeichnet, daß** die freien Enden (41) der Zungen (40) in einem Bereich nahe dem Übergang zwischen Seitenwand (21) und Rücken (22) des Blechkörpers (20) vorgesehen sind.

7. Wischarm nach einem der vorhergehenden Ansprüche, **dadurch gekennzeichnet, daß** die Zungen (40) wenigstens an ihren freien Enden (41) scharfkantig ausgebildet sind.

## Claims

1. Wiper arm of a wiper device for a windscreen of a vehicle with a fastening part (10) which is formed by a sheet metal element (20) substantially U-shaped in cross-section and with two side walls (21) and a back (22) connecting the side walls (21) and by a cast part (30) made of metal which has a, in particular conical, hole (33) for non-rotatable fastening to a wiper shaft (11) and is secured to the sheet metal element (20), the cast part (30) being arranged in the free cross-section of the sheet metal element (20) and being supported on the interior faces of the sheet metal element (20), **characterised in that** the cast part (30) is fastened to the sheet metal element (20) by at least two tongues (40) located inside the side walls (21, 23) of the sheet metal element (20) and separated therefrom, which, after the cast part (30) has been inserted into the free cross-section of the sheet metal element (20), are each pushed into a recess (42) of the cast part (30) with permanent deformation.

2. Wiper arm according to claim 1, **characterised in that** the tongues (40) are supported in the recesses (42) by their free end (41).

3. Wiper arm according to claim 2, **characterised in that** the tongues (40) are each supported by the end face (46) located at their free end (41) on an opposing support face (45) of a recess (42) of the cast part (30) and **in that** in the process the end face (46) of the tongue (40) and the support face (45) of the recess (42) extend parallel to one another.

4. Wiper arm according to claim 3, **characterised in that** the support face (45) of the recess (42) and the end face (46) of the tongue (40) are arranged opposite an imaginary plane, extending at right angles to the side wall (21), at an acute angle which is preferably approximately 10° to 25°.

5. Wiper arm according to any one of the preceding claims, **characterised in that** the tongues (40) point with their free end (41) in the direction of the back (22) of the sheet metal element (20).

6. Wiper arm according to any one of the preceding claims, **characterised in that** the free ends (41) of the tongues (40) are provided in a region close to the transition between side wall (21) and back (22) of the sheet metal element (20).

7. Wiper arm according to any one of the preceding claims, **characterised in that** the tongues (40) are formed, at least at their free ends (41), with sharp edges.

## Revendications

1. Bras d'essuie-glace appartenant à un dispositif d'essuie-glace pour une vitre d'un véhicule, comprenant une partie de fixation (10) qui est formée d'un corps en tôle (20) sensiblement en forme de U en section transversale , qui possède deux parois latérales (21) et un dos (22) qui relie les parois latérales (21), ainsi que d'une pièce coulée (30) en métal qui présente un perçage (33), en particulier conique, pour la fixation solidaire en rotation sur un arbre d'essuie-glace (11) et qui est fixée au corps en tôle (20), la pièce coulée (30) étant disposée dans la section libre du corps en tôle (20) et s'appuyant ici contre les surfaces internes du corps en tôle (20), **caractérisé en ce que** la fixation de la pièce coulée (30) au corps en tôle (20) est assurée par au moins deux languettes (40) qui se trouvent à l'intérieur des parois latérales (21, 23) du corps en tôle (20) et font saillie sur ces dernières, languettes qui, après que la pièce coulée (30) a été emboîtée dans la section libre du corps en tôle (20), sont enfoncées chacune dans un évidement (42) de la pièce coulée (30) avec déformation permanente.

2. Bras d'essuie-glace selon la revendication 1, **caractérisé en ce que** les languettes (40) prennent appui dans les évidements (42) par leur extrémité libre (41).

3. Bras d'essuie-glace selon la revendication 2, **caractérisé en ce que** les languettes (40) prennent appui, chacune par la surface frontale (46) qui se trouve à leur extrémité libre (41), contre une surface d'appui opposée (45) d'un évidement (42) de la pièce coulée (30) et **en ce que**, dans cette action, la surface frontale (46) de la languette (40) et la surface d'appui (45) de l'évidement (42) s'étendent parallèlement entre elles.

4. Bras d'essuie-glace selon la revendication 3, **caractérisé en ce que** la surface d'appui (45) de l'évidement (42) et la surface frontale (46) de la languette (40) sont disposées en formant un angle aigu, qui est de préférence d'environ 10 degrés à 25 degrés, avec un plan fictif s'étendant perpendiculairement à la paroi latérale (21).

5. Bras d'essuie-glace selon une des revendications précédentes, **caractérisé en ce que** les languettes (40) pointent par leur extrémité libre (41) en direction du dos (22) du corps en tôle (20).

6. Bras d'essuie-glace selon une des revendications précédentes, **caractérisé en ce que** les extrémités libres (41) des languettes (40) sont prévues dans une région proche du raccordement entre la paroi latérale (21) et le dos (22) du corps en tôle (20).

7. Bras d'essuie-glace selon une des revendications précédentes, **caractérisé en ce que** les languettes (40) sont réalisées à arête vive, au moins à leurs extrémités libres (41).
